# EUROPÄISCHE PATENTANMELDUNG

(11) **EP 0 581 173 A1**
(43) Veröffentlichungstag der Anmeldung: **02.02.1994**
(21) Anmeldenummer: 93111634.7
(22) Anmeldetag: 21.07.1993
(51) Int. Cl.: H02K 29/08, F04D 13/06

(54) **Kraftstoffördergerät**

(30) Priorität: 28.07.1992 DE 4224847
(71) Anmelder: Licentia Patent-Verwaltungs-GmbH, D-60596 Frankfurt (DE)
(72) Erfinder: Traeger, Friedrich, Dipl.-Ing., D-13503 Berlin (DE)
(74) Vertreter: Vogl, Leo, Dipl.-Ing.

(57) **Zusammenfassung**

Bei bekannten Kraftstofförderaggregaten sind die Pumpe und der diese antreibende Elektromotor in einem gemeinsamen Gehäuse gelagert, bei dem der Rotor des Elektromotors und der Pumpenrotor über einen Mitnehmer miteinander in drehschlüssiger Verbindung stehen. Durch die einseitige Befestigung des Stators ist hierbei nur eine schmale Bauweise des Elektromotors in axialer Richtung möglich. Damit die für Kraftstofförderaggregate erforderliche Motorleistung erreicht wird, muß der Läuferdurchmesser entsprechend größer gewählt sein, was sich störend beim Einbau in Kraftfahrzeugen auswirkt. Erfindungsgemäß wird dieser Nachteil dadurch vermieden, daß der Elektromotor (7) aus einem bürstenlosen Gleichstrommotor mit einem Außenläuferrotor (15) und einem Innenstator (17) besteht, wobei die mit dem Außenläuferrotor (15) verbundene Welle (19) eine Dreifachlagerung aufweist. Das Kraftstofförderaggregat zeichnet sich durch einen bürstenlosen Gleichstrommotor hoher Leistung aus, der in einem kompakt ausgebildeten Gehäuse mit einem kleinen Außendurchmesser angeordnet ist.

## Beschreibung

Die Erfindung betrifft ein Kraftstoffördergerät mit einer Pumpe und einem mit dieser in einem gemeinsamen Gehäuse zusammengelagerten Elektromotor, bei dem der Rotor des Elektromotors und der Pumpenrotor über einen Mitnehmer miteinander eine drehschlüssige Verbindung haben gemäß der im Oberbegriff des Patentanspruchs 1 angegebenen Art.

Moderne Kraftstoffsysteme unterliegen extremen Einsatzbedingungen durch unterschiedliche Kraftstoffqualität und extremen Temperaturbelastungen wie z. B. höhere Motortemperatur infolge von Geräuschdämmaßnahmen im Bereich des Motors. Die an den Fahrkomfort gestellten Ansprüche bewirken also ständig steigende Anforderungen wie z. B. an die Geräuscharmut. So werden Geräusche in bestimmten Frequenzbereichen, wie sie z. B. durch elektrische Kraftstoffpumpen bei Otto-Einspritzmotoren verursacht werden, zunehmend als störend empfunden. Außerdem ist diese Geräuschbildung bei elektrischen Kraftstoffpumpen, welche als Inline- oder Intankversion ausgeführt werden, unterschiedlich. Eine weitere Forderung besteht darin, daß die elektrischen Kraftstoffpumpen einen kompakten Aufbau aufweisen und leistungsfähig sind.

So ist z. B. durch die DE-OS 27 45 760 eine leistungsfähige Kraftstoffpumpe bekannt, die zwei wirkungsmäßig hintereinander geschaltete, einzelnen Pumpenstufen aufweist. Bei einer solchen integrierten zweistufigen Pumpe können sich Schwierigkeiten bezüglich der Drehmitnahme beider Pumpenrotoren ergeben, wenn diese wenn wie üblich von einem gemeinsamen Elektromotor angetrieben werden. Auch ist der Aufbau einer solchen Pumpe recht kompliziert und aufwendig, da zusätzliche Abdichtungen der beiden Pumpenstufen gegeneinander erforderlich sind. Weiterhin weist diese bekannte Pumpe noch einen großen Außendurchmesser auf.

Außerdem sind Kraftstoffpumpen mit einseitiger Statorbefestigung des Elektromotors bekannt, welche dadurch in axialer Richtung nur eine schmale Bauweise ermöglichen. Um hierbei trotzdem eine hohe Motorleistung zu erzielen, muß der Läuferdurchmesser entsprechend größer gewählt werden. Derartige Motoren mit großem Läuferdurchmesser haben aber ein hohes Läuferträgheitsmoment und dadurch eine größere Hochlaufzeit. Bei Kraftstoffpumpen soll der Hochlauf in maximal drei Sekunden nach dem Drehen des Zündschlüssels in einem PKW erfolgen.

Der Erfindung liegt die Aufgabe zugrunde, eine Kraftstoffpumpe, insbesondere für ein Kraftfahrzeug zu schaffen, die einen einfachen und montagefreundlichen Aufbau ermöglicht, eine hohe Leistung bei einem kleinen Außendurchmesser gewährleistet und die eine kurze Hochlaufzeit hat. Diese Aufgabe wird durch die im Patentanspruch 1 gekennzeichneten Merkmale gelöst.

Die erfindungsgemäße Kraftstoffpumpe ist unkonpliziert, hat einen kleinen Außendurchmesser bei großer Pumpleistung und ist in einem Aluminiumrohr einsetzbar, dessen Rohrenden einfach als Ansaug- und Auslaßöffnung ausgebildet sind. Der kleine Außendurchmesser des Kraftstoffaggregates ermöglich eine Montage desselben unter dem Wagenboden.

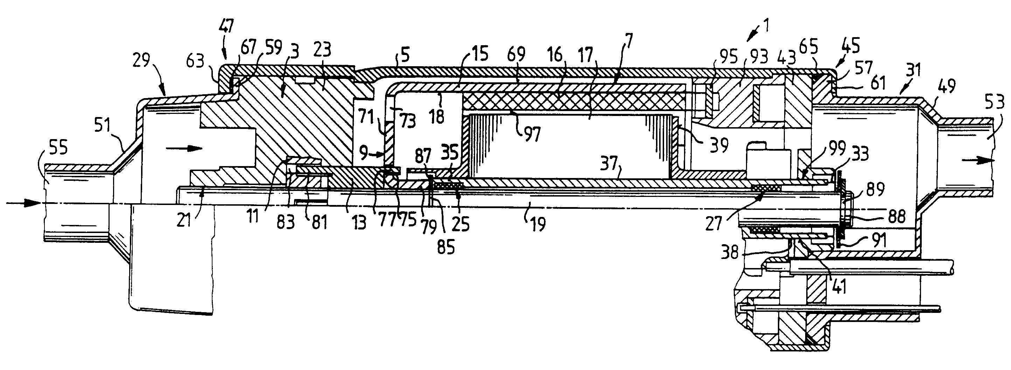

Weitere vorteilhafte Ausgestaltungen des Erfindungsgegenstandes sind den weiteren Unteransprüchen zu entnehmen. Die Figur zeigt einen Schnitt durch ein Kraftstoffördergerät 1, welches aus einer Pumpe 3 und einem mit dieser in einem gemeinsamen Gehäuse 5 zusammen gelagerten Elektromotor 7 besteht. Hierbei sind der Rotor 9 des Elektromotors 7 und der Pumpenrotor 11 über einen Mitnehmer 13 drehschlüssig miteinander verbunden. Der Elektromotor 7 ist ein bürstenloser Gleichstrommotor mit einem Außenläuferrotor 15 und einem Innenstator 17. Der Außenläuferrotor 15 ist mit einer Welle 19 fest verbunden, welche einerseits in einer ersten Lagerstelle 21 im Pumpenwerk 23 der Kraftstoffpumpe 3 und andererseits in einem zweiten Lager 25 und in einem dritten Lager dritten Lager 27 drehbar gelagert. Das Gehäuse 5 besteht aus einem Aluminiumrohr, in dem die Pumpe 3 und der Elektromotor 7 hintereinander angeordnet sind. Das zweite Lager 25 und das dritte Lager 27 befinden sich in den Enden 33, 35 einer feststehenden Hohlachse 37, welche als Innenrohr des Stators 17 ausgebildet und im Bereich des Druckstutzens 31 in einem stationären Bauteil gegen Verdrehung gesichert gelagert ist. Die Hohlwelle 37 weist an ihrem gegenüber dem Statorpaket 39 axial vorstehenden Ende ein Außenprofil 38 auf, das zwecks einer unverdrehbaren Lagerung der Hohlachse 37 in eine entsprechend profiliert ausgebildete Ausnehmung 41 in einem Lagerschild 43 formschlüssig eingreift. Das Außenprofil 38 und die Ausnehmung 41 haben jeweils ein Sechs-Kant-Profil. Im Rahmen der Erfindung können diese formschlüssigen Profile auch anders ausgebildet sein.

Die freien Enden 45, 47 des aus Aluminium bestehenden Gehäuses 5 sind durch je einen Abschlußdeckel 29, 31 verschlossen, welche einerseits einen verjüngt ausgebildeten Saugstutzen 49 und einen Druckstutzen 51 mit Öffnungen 53, 55 und andererseits mit je einem in das Gehäuse 5 bis zum Anschlag von Kragen 57, 59 an das Lagerschild 43 bzw. an die Pumpenplatte 23 einschieb- und durch Umbördelungen 61, 63 an den freien Enden des Gehäuses 5 in diesem Gehäuse 5 arretierbar gehalten werden. Weiterhin sind zwischen den Kragen 57, 59 der Abschlußdeckel 29, 31 und dem Lagerschild 43 bzw. der Pumpengrundplatte 23 Flüssigkeitsdichtungen 65, 67 angeordnet. Hierdurch wird sicher verhindert, daß Kraftstoff aus dem Gehäuse 5 des Kraftstoffaggregates 1 ins Freie austritt. Der Außenläuferrotor 15 besteht aus einem glockenförmig ausgebildeten Bauteil mit einer zylinderförmigen Mantelfläche 69, dessen Bodenteil 71 Durchtrittsöffnungen 73 für den Kraftstoff und Ausnehmungen 75 für Kupplungselemente 77 des auf der Welle 19 gelagerten Mitnehmers 13 und mittig ein nach innen ausgebildetes, zylindrisches Kragenteil 79 für eine einseitige Lagerung des Rotors 15 mittels eines Preßsitzes auf der Welle 19 aufweist. Andererseits weist der Mitnehmer 13 Kupplungselemente 81 zum formschlüssigen Eingreifen in Ausnehmungen 83 des Pumpenwerkes 23 und auf der Welle 19 drehbar gelagerten Pumpenrades 11 auf. Durch einfache Steckverbindungen ist also der Mitnehmer 13 einerseits mit dem Pumpenrad 11 und andererseits mit dem Außenläuferrotor 15 schnell und sicher zu verbinden. Diese Verbindungsart eignet sich auch für eine automatische Montage des Kraftstoffaggregates 1.

Ein axiales Verschieben des Pumpenwerkes 23, des Mitnehmers 13 und des Außenläuferrotors 15 wird durch einen in eine Paßnut 85 der Welle 19 einrastbaren Sicherungsring 87 verhindert. Zwischen dem Lagerschild 43 und dem freien Ende des Außenläuferrotors 15 ist ein Trägerteil 93 für Hallsensoren 95 in dem Gehäuse 5 fest angeordnet, wobei die Hallsensoren 95 Steuerimpulse von dem Außenläuferrotor 15 erhalten und an eine nicht näher dargestellte Steuervorrichtung weiterleiten. Ein axiales Verschieben des Lagerschildes 43 und damit des Trägerteiles 93 nach der Montage des Kraftstoffaggregates 1 wird durch einen Sicherungsring 91 verhindert, der in eine am freien Ende 88 der Welle 19 angeordnete Paßnut 89 einrastbar ist.

Die Dreifachlagerung des Kraftstoffaggregates 1 durch die drei Lager 21, 25 und 27 ermöglicht den Bau von einem Außenläufermotor mit einem relativ langen Stator 17. Das Lager 25 stützt den Stator 17 ab, wodurch der Luftspalt an der Stelle 97 zwischen dem Stator 17 und den Permanentmagneten 16 an der Innenseite 18 des Außenläuferrotors 15, auch bei hoher Rüttelbeanspruchung konstant bleibt. Ohne das Lager 25 würde die große Masse des Stators 17 bei einer Rüttelbeanspruchung zur Auslenkung und Berührung an der Stelle 97 zum Läufer 15 führen. Eine Voraussetzung für diese Dreifachlagerung ist die bewegliche Aufnahme des Stators 17 an der Stelle 99, die ein Verklemmen der Welle 19 sicher verhindert.

## Patentansprüche

1. Kraftstoffördergerät, bestehend aus einer Pumpe und einem mit dieser in einem gemeinsamen Gehäuse zusammen gelagerten Elektromotor, bei dem der Rotor des Elektromotors und der Pumpenrotor über einen Mitnehmer miteinander eine drehschlüssige Verbindung haben, **dadurch gekennzeichnet,** daß der Elektromotor (7) aus einem bürstenlosen Gleichstrommotor mit einem Außenläuferrotor (15) und einem Innenstator (17) besteht, wobei die mit dem Außenläuferrotor (15) verbundene Welle (19) eine dreifache Lagerung aufweist.

2. Gerät nach Anspruch 1, **dadurch gekennzeichnet,** daß der Außenläuferrotor (15) mit einer Welle (19) fest verbunden ist, welche einerseits mit ihrem dem Saugstutzen (29) zugewandten Ende in einer ersten Lagerstelle (21) in dem Pumpengrundwerk (23) und andererseits in einem zweiten Lager (25) und in einem dritten Lager (27) drehbar gelagert ist, von denen das zweite Lager (25) und das dritte Lager in den freien Enden (33, 35) einer feststehenden Hohlachse (37) angeordnet sind, und daß die Hohlachse (37) als Innenstator des Stators (17) ausgebildet und im Bereich des Druckstutzens (31) in einem stationären Bauteil (39) gegen Verdrehung gesichert gelagert ist.

3. Gerät nach Anspruch 2, **dadurch gekennzeichnet,** daß der Außenläuferrotor (15) über den Mitnehmer (13) mit dem Pumpenrad (11) in dem Pumpenwerk (23) drehfest verbunden ist.

4. Gerät nach Anspruch 2 oder 3, dadurch gekenn**zeichnet,** daß die Hohlachse (37) an ihrem gegenüber dem Statorpaket (39) axial vorstehenden Ende auf der Seite des Druckstutzens (31) in dem Gehäuse (5) ein Außenprofil auf weist, das zwecks einer unverdrehbaren Lagerung der Hohlachse (37) in eine entsprechend profiliert ausgebildete Ausnehmung (41) in einem als das stationäre Bauteil ausgebildeten Lagerschild (43) formschlüssig eingreift.

5. Gerät nach Anspruch 4, **dadurch gekennzeichnet,** daß das Außenprofil auf der Hohlachse (37) und die Ausnehmung in dem Lagerschild (43) aus Sechs-Kantprofilen bestehen.

6. Gerät nach Anspruch 2, 3, 4 oder 5, **dadurch gekennzeichnet,** daß die freien Enden (45, 47) des aus Aluminium bestehenden Gehäuses (5) durch je einen Abschlußdeckel (29, 31) verschlossen sind, welche einerseits einen verjüngt ausgebildeten Saugstutzen (49) und einen Druckstutzen (51) mit Öffnungen (53, 55) aufweisen und andererseits mit je einem in das Gehäuse (5) bis zum Anschlag von Kragen (57, 59) an das Lagerschild (43) bzw. an die Pumpenplatte (23) einschieb- und durch Umbördelungen (61, 63) an den freien Enden des Gehäuses (5) in diesem Gehäuse (5) arretierbar gehalten werden.

7. Gerät nach Anspruch 6, **dadurch gekennzeichnet,** daß Flüssigkeitsdichtungen (65, 67) zwischen den Kragen (57, 59) der Abschlußdeckel (29, 31) und dem Lagerschild (43) bzw. der Pumpengrundplatte (23) angeordnet sind.

8. Gerät nach einem der vorhergehenden Ansprüche, **dadurch gekennzeichnet,** daß der Außenläuferrotor (15) aus einem glockenförmig ausgebildeten Bauteil mit einer zylinderförmigen Mantelfläche (69) besteht, dessen Bodenteil (71) Durchtrittsöffnungen (73) für den Kraftstoff und Ausnehmungen (75) für Kupplungselemente (77) des auf der Welle (19) gelagerten Mitnehmers (13) und mittig ein nach innen ausgebildetes, zylindrisches Kragenteil (79) für eine einseitige Lagerung des Rotors (15) mittels eines Preßsitzes auf der Welle (19) aufweist.

9. Gerät nach einem der vorhergehenden Ansprüche, **dadurch gekennzeichnet,** daß der Mitnehmer (13) andererseits Kupplungselemente (81) zum formschlüssigen Eingreifen in Ausnehmungen (83) des in dem Pumpenwerk (23) und auf der Welle (19) drehbar gelagerten Pumpenrades (11) aufweist.
